# FASCICULE DE BREVET EUROPEEN

(11) **EP 2 622 613 B1**
(45) Date de publication et mention de la délivrance du brevet: **08.04.2020**
(21) Numéro de dépôt: 11773797.3
(22) Date de dépôt: 27.09.2011
(51) Int. Cl.: H01F 1/34, H01F 10/24, C04B 35/26, G02F 1/09

(54) **Procédé de fabrication d'un composant hyperfréquence de FERRITE GRENAT D'YTTRIUM-FER et COMPOSANT HYPERFRÉQUENCE**
HERSTELLUNGSVERFAHREN eines HOCHFREQUENZBAUTEILs von YTTRIUM-EISEN-GRANATFERRIT, und HOCHFREQUENZBAUTEIL
MANUFACTURING PROCESS of a HYPERFREQUENCE DEVICE of YTTRIUM-IRON-GARNET FERRITE, AND HYPERFREQUENCE DEVICE

(30) Priorité: 27.09.2010 FR 1003806
(43) Date de publication de la demande: 07.08.2013
(73) Titulaire: THALES, 92200 Neuilly-sur-Seine (FR)
(72) Inventeur: LEBOURGEOIS, Richard, F-91767 Palaiseau Cedex (FR); CIBIEN, Gérard, F-91767 Palaiseau Cedex (FR)
(74) Mandataire: Lavoix
(86) Numéro de dépôt international: PCT/FR2011/052255
(87) Numéro de publication internationale: WO 2012/042168

(56) Documents cités:
- EP-A1- 0 737 987
- EP-A1- 1 821 321
- DEFANG S ET AL: "Magnetic and magneto-optical properties of Bi-substituted garnet films", JOURNAL OF MAGNETISM AND MAGNETIC MATERIALS, ELSEVIER SCIENCE PUBLISHERS, AMSTERDAM, NL, vol. 135, no. 2, 1 juillet 1994 (1994-07-01), pages 241-250, XP024453457, ISSN: 0304-8853, DOI: DOI:10.1016/0304-8853(94)90353-0 [extrait le 1994-07-01]
- SHIMOKAWA K ET AL: "Effects of Cu addition on Bi-substituted garnet film for magnetooptical recording", IEEE TRANSLATION JOURNAL ON MAGNETICS IN JAPAN USA, vol. 6, no. 10, 1 octobre 1991 (1991-10-01), pages 889-894, XP002628518, ISSN: 0882-4959

## Description

L'invention concerne des matériaux ferrites à faibles pertes magnétiques, particulièrement adaptés à la réalisation de composants hyperfréquences, et notamment de composants passifs magnétiques à faibles pertes fonctionnant à des fréquences de l'ordre de quelques Gigahertz.

De tels composants sont particulièrement recherchés actuellement tant pour des applications civiles de télécommunications que pour des applications RADAR fonctionnant, typiquement, dans des gammes de fréquences comprises entre quelques Gigahertz et quelques dizaines de Gigahertz.

Il peut s'agir de composants passifs magnétiques qui réalisent, dans les systèmes de communications hyperfréquences, des fonctions de type filtres, déphaseurs, circulateurs ou isolateurs.

Pour cela, les composants passifs peuvent typiquement comprendre un élément en matériau ferrite dans lequel se propage une onde électromagnétique hyperfréquence. Le matériau ferrite, préalablement aimanté, possède une anisotropie magnétique qui agit différemment sur l'onde électromagnétique suivant qu'elle est polarisée dans un sens ou dans l'autre. Ce principe bien connu de non-réciprocité est basé sur la résonance gyromagnétique, ou encore la résonance ferromagnétique. De cette façon, on empêche les ondes électromagnétiques réfléchies de revenir dans l'émetteur et de perturber son fonctionnement.

Pour ces applications, les performances du composant sont conditionnées par de faibles pertes magnétiques et diélectriques.

Les pertes magnétiques sont directement liées à l'aimantation à saturation qui doit être ajustée en fonction de la bande de fréquences de l'application.

Pour des fonctionnements à basses fréquences (1 à 10 GHz), on est amené à rechercher des aimantations à saturation faibles, typiquement inférieures à 0,2 Tesla, sinon les pertes magnétiques sont trop importantes. Pour des fonctionnements à plus hautes fréquences (10 à 100 GHz), on est amené à rechercher des aimantations plus élevées, typiquement comprises entre 0,2 Tesla et 0,55 Tesla, pour obtenir de meilleures efficacités, les pertes magnétiques étant réduites.

Des familles de matériaux ferrites particulièrement adaptés pour ces applications sont des matériaux ferrites de structure grenat qui correspondent à une organisation cristalline particulière. La structure cristallographique des grenats est cubique. Les sites cristallographiques sont tétraédriques (correspondant à un environnement de 4 ions oxygène), octaédriques (correspondant à un environnement de 6 ions oxygène) et dodécaédriques (correspondant à un environnement de 8 ions oxygène). On peut citer comme exemple le grenat d'yttrium-fer (YIG) de formule chimique :

{Y³⁺}₃ [Fe³⁺]₂ (Fe³⁺)₃ O₁₂

dans laquelle les symboles { }, [ ] et ( ) indiquent respectivement, comme il est habituel, les sites dodécaédriques, octaédriques et tétraédriques et les valeurs ³⁺ la valence des ions.

Ces ferrites présentent de faibles aimantations à saturation qui permettent de limiter les pertes magnétiques à basse fréquence (1 à 10 GHz), ainsi que des pertes diélectriques faibles. Ainsi le ferrite grenat à base d'yttrium et de fer de formule générique Y₃Fe₅O₁₂ permet d'obtenir des largeurs de raie de résonance ferromagnétique inférieures à 4000 A/m à 10 GHz et des tangentes de pertes diélectriques inférieures ou égales à 3.10⁻⁴ à 10 GHz.

Les composants utilisant ce type de ferrite comportent d'autres éléments. Les circulateurs/isolateurs hyperfréquences sont ainsi réalisés par assemblage d'un tel ferrite avec des aimants permanents, des conducteurs, des matériaux magnétiques doux et/ou des diélectriques. Mais cet assemblage, outre qu'il s'agit d'une opération fastidieuse et coûteuse, nécessite l'emploi de colles et autres produits organiques. Ces produits sont prohibés dans les applications au domaine spatial, car ils tendent à dégazer sous pression réduite, ce qui détériore le composant au fil du temps.

Le but de l'invention est de proposer une nouvelle famille de compositions de ferrites à faibles pertes magnétiques adaptés à la réalisation à faible coût de composants hyperfréquences pouvant être utilisés notamment dans la fabrication de composants pour le domaine spatial, car ces composants seraient exempts de matériaux susceptibles de dégazer sous pression réduite.

L'invention a pour objet un procédé de fabrication d'un composant hyperfréquence selon la revendication 1. Au moins l'un des deux broyages a lieu de préférence en milieu humide.

Le frittage est effectué de préférence sous air ou oxygène.

L'un au moins desdits éléments autres que le ferrite peut être un diélectrique.

L'un au moins desdits éléments autres que le ferrite peut être une couche d'un métal, tel que l'or ou un alliage argent-palladium.

L'invention a également pour objet un composant hyperfréquences, caractérisé en ce qu'il est réalisé par le procédé précédemment décrit.

Il peut s'agir d'un filtre.

Il peut s'agir d'un déphaseur.

Il peut s'agir d'un circulateur.

Il peut s'agir d'un isolateur.

Comme on l'aura compris, l'invention consiste notamment à réaliser, pour les grenats d'yttrium-fer utilisables dans des composants hyperfréquences, une substitution partielle de l'Y et du Fe dans les grenats d'yttrium-fer simultanément par du Bi et du Cu, dans les proportions qui ont été citées. D'autres éléments peuvent également être présents, dans les proportions qui ont été citées.

Des grenats d'ythrium pouvant incorporer du Bi et du Cu sont déjà connus dans l'art antérieur, voir le document EP-A-0 737 987. Cependant, ils diffèrent des grenats de la présente invention en ce que les composants introduisant le Bi et le Cu sont introduits de façon à ce que Bi et Cu viennent s'ajouter aux autres composants du grenat. Dans l'invention ces éléments se substituent au Y et au Fe.

Un effet de cette substitution est d'abaisser la température de frittage du ferrite. On rend ainsi possible l'assemblage du composant, ou au moins de plusieurs de ses pièces essentielles, par un procédé de cofrittage desdites pièces, qui permet de se passer de colles et autres produits organiques susceptibles de dégazer sous pression réduite. Ces composants sont donc utilisables dans le domaine spatial. Egalement, leur fabrication est simplifiée. Enfin le frittage du ferrite s'effectuant à une relativement basse température (de l'ordre de 850 à 1150°C, de préférence entre 900 et 1000°C), le coût de ce frittage lui-même est sensiblement diminué, du fait qu'on dépense moins d'énergie pour le réaliser et que les outils de frittage sont moins sollicités en température.

On peut ainsi envisager de cofritter le ferrite avec des pistes métalliques en or et/ou avec des céramiques diélectriques ou magnétiques, composés dont les températures de fusion ou de frittage sont compatibles avec les températures de frittage des ferrites selon l'invention. C'est ainsi l'ensemble du composant, ou au moins une partie significative du composant, qu'il est possible de fabriquer au cours d'une seule et même opération de frittage. Cela procure un gain de temps et de précision dimensionnelle sur cette fabrication. Mais bien entendu, ces ferrites doivent conserver des propriétés magnétiques compatibles avec leur utilisation avantageuse dans les composants hyperfréquences de divers types.

Egalement, l'invention permet d'obtenir des ferrites présentant des densités particulièrement élevées, ce qui est favorable aux propriétés magnétiques recherchées.

On rappelle que, de manière générale les ferrites sont fabriqués selon un procédé classique comprenant les étapes suivantes :
- une étape de pesée des matières premières ;
- une étape de mélange et de broyage des matières premières ;
- une étape de traitement thermique, appelée chamottage, conduite à une température élevée, typiquement 1200°C, ayant pour but de synthétiser la phase grenat sous forme de poudre ;
- une seconde étape de broyage et de pressage ;
- le frittage à très haute température de la poudre chamottée rebroyée, ayant pour but de densifier la céramique tout en lui conférant la forme souhaitée.

Typiquement avec un grenat d'yttrium-fer classique de type Y₃Fe₅O₁₂, le frittage est effectué à une température comprise entre 1450°C et 1550°C. En ajoutant des constituants de type calcium et vanadium, on peut abaisser cette température à environ 1250-1300°C.

Les matériaux ferrites selon l'invention comportant simultanément du cuivre et du bismuth à la place d'une partie de l'Y et/ou du Fe présentent une température de frittage nettement abaissée, à savoir de 850 à 1150°C, de préférence entre 900 et 1000°C.

Le cuivre présente l'intérêt de permettre de se passer partiellement ou totalement notamment du vanadium (élément qui serait également envisageable pour obtenir un ferrite à basse température de frittage) qui est un élément toxique. Ainsi on parvient à élaborer des ferrites à température de frittage nettement abaissée, tout en diminuant ou éliminant la présence d'éléments toxiques. Leur synthèse industrielle est ainsi plus facile à mettre en œuvre, et on peut ainsi anticiper d'éventuelles évolutions réglementaires qui limiteraient l'usage du V.

La basse température de frittage réduit le coût de fabrication du ferrite et rend possible son cofrittage avec d'autres types de matériaux comme par exemple certains métaux, tels que l'or ou des alliages argent-palladium, ou des céramiques qui entrent dans la fabrication des composants comme les ferrites pour aimants permanents, ou les matériaux diélectriques tels que ceux à base d'alumine ou de titanate. Par exemple, un ferrite selon l'art antérieur connu, destiné à constituer le cœur d'un circulateur, est métallisé avec de l'argent déposé le plus souvent par sérigraphie. On vient ensuite coller sur le ferrite un ou deux aimants (qui créent le champ magnétique polarisant) constitués par un aimant permanent de type hexaferrite, ou par un alliage samarium-cobalt ou néodyme-fer-bore. En effet selon l'état de l'art connu il est impossible de co-fritter un ferrite grenat YIG habituel avec un métal car les températures minimales de frittage pour les grenats YIG habituels sont incompatibles avec les températures de fusion des principaux métaux utilisés en microélectronique (962°C pour l'argent, 1064°C pour l'or...).

En ramenant la température de frittage du ferrite grenat YIG un peu en dessous de la température de fusion de ces métaux, notamment de Au et Ag, l'invention permet de réaliser le cofrittage du ferrite et de ces métaux.

De plus un avantage d'avoir des températures de frittage abaissées est de minimiser les réactions de diffusion en phase solide des espèces présentes, et donc de préserver les compositions chimiques de départ tout en associant mécaniquement les différents matériaux. On peut, par ce biais, éviter des étapes d'usinage et d'assemblage, et ainsi fabriquer des composants hyperfréquences à faible coût.

Un autre avantage important de l'invention est la possibilité d'obtenir un composant qui ne renferme pas de produits organiques. En effet, lors de leur assemblage, les circulateurs/isolateurs de l'état de l'art nécessitent l'utilisation de colles, comme par exemple pour les structures composites ferrite-diélectrique, ce qui limite leur utilisation, notamment dans les applications spatiales dans lesquelles les matériaux susceptibles de subir un dégazage (colles ou autres produits organiques) sont prohibés.

Selon l'art antérieur connu, à partir de la formulation de base du Y₃Fe₅O₁₂ de nombreuses compositions ont été essayées, de manière à obtenir les caractéristiques souhaitées pour diverses applications.

Suivant les fréquences de fonctionnement et les puissances mises en jeu, on tient compte des caractéristiques du matériau suivantes :
- aimantation à saturation,
- pertes magnétiques à bas niveau de puissance (largeur de raie ΔH ou ΔH_{eff}),
- pertes magnétiques à fort niveau de puissance (ΔHₖ),
- pertes diélectriques,
- stabilité en température.

Chaque type d'application (bande de fréquences, niveau de puissance, température de fonctionnement et stabilité en température) conduit à un compromis entre tous ces paramètres.

On a, avant de parvenir à l'invention, essayé divers éléments pouvant servir de substituants au Fe et/ou à l'Y.

Remplacer un peu du Fe par de l'Al permet de diminuer l'aimantation à saturation du ferrite, sans augmenter ses pertes magnétiques. Le matériau peut ainsi être adapté à la fréquence de fonctionnement du composant. Mais aux forts niveaux de puissance, on n'obtient pas de propriétés adéquates.

Remplacer une partie de l'Y par du Gd permet de diminuer l'aimantation à saturation du ferrite sans diminuer la température de Curie. La tenue en puissance (ΔHₖ) est également améliorée. Mais en contrepartie, ΔH et ΔH_{eff} sont élevés.

On peut combiner les avantages de l'Al et du Gd en ajoutant ces deux éléments ensemble. Mais en contrepartie, la température de Curie diminue et ΔH et ΔH_{eff} sont élevés.

Remplacer une partie de l'Y par de l'In ou une partie de l'Y et du Fe par du Cu et du Zr augmente l'aimantation à saturation. Mais en contrepartie, ΔHₖ diminue.

Remplacer une partie de l'Y et du Fe par Ca, In et V permet d'augmenter l'aimantation à saturation et de diminuer les pertes magnétiques à bas niveaux de puissance. Ces additions permettent aussi de diminuer la température de frittage. Mais le ΔHₖ est abaissé.

Remplacer une partie du Fe par du Co, éventuellement associé à Si et/ou Ge, améliore le comportement des composants dans des conditions de puissances élevées, mais au détriment de leurs performances à bas niveau de puissance car leur ΔH augmente.

Remplacer une partie de Y par du Gd et/ou des terres rares magnétiques telles que Dy ou Ho améliore également le comportement des composants dans des conditions de puissance élevées, tout en dégradant aussi les pertes à bas niveaux de puissance.

Cependant, les inventeurs ont constaté que les substitutions partielles de Y et Fe par Bi et Cu simultanément, dans les proportions qui vont être exposées, sont des moyens plus efficaces que ceux précédemment envisagés pour obtenir des ferrites qui présentent des propriétés magnétiques comparables, au moins pour certaines d'entre elles, à celles des grenats d'yttrium-fer classiques, avec comme principaux avantages :
- un abaissement très sensible de la température de frittage du ferrite, rendant possible son cofrittage avec d'autres matériaux utilisés classiquement pour la fabrication des composants dans lesquels ce ferrite est inclus ;
- une augmentation de la densité du ferrite, qui est favorable à l'obtention des propriétés magnétiques recherchées ;
- la diminution de la quantité d'Y nécessaire à la fabrication du ferrite et son remplacement par des composés moins onéreux, ne présentant, par ailleurs, pas la toxicité du V ; du V peut être ajouté, mais n'est pas indispensable.

Il doit être bien compris que le Bi présent dans le ferrite selon l'invention doit y être présent au moins essentiellement sous forme d'ion métallique et non sous forme oxydée. En effet, il est connu d'utiliser, dans la fabrication des ferrites, l'oxyde de Bi comme fondant d'assistance au frittage. Mais dans ce cas, on n'observe pas les mêmes propriétés magnétiques du ferrite que lorsque, selon l'invention, le Bi se trouve au moins essentiellement sous forme d'ions insérés dans le réseau cristallin, comme le garantit le procédé de préparation qui sera exposé plus loin.

En plus du Bi et du Cu, on peut introduire dans le ferrite d'autres éléments, tels que ceux cités plus haut, afin d'optimiser certaines des propriétés recherchées.

De manière générale, la formule des ferrites selon l'invention est la suivante, les valeurs numériques données se référant au nombre d'atomes du composant par rapport aux nombres d'atomes des autres composants (et non à leurs rapports en masse) :

Yₐ TR_{b} Bi_{c} Fe_{d} Alₑ In_{f} Ca_{g} Cuₕ Zrᵢ Vⱼ Coₖ Siₗ O_{12 ±γ}

avec :
* -1 ≤ γ ≤ 1
* 3(a+b+c+d+e+f) + 2(g+h+k) + 4(i+l) +5j = 24 ± 2γ
* 1 ≤ a ≤ 3,5
* 0 ≤ b≤ 1,5
* 0,1 ≤ c ≤ 1
* 4 ≤ d ≤ 5
* 0 ≤ e ≤ 1,5
* 0 ≤ f ≤ 0,8
* 0 ≤ g ≤ 1
* 0,01 ≤ h ≤ 0,05
* 0 ≤ i ≤ 0,2
* 0 ≤ j ≤ 0,8
* 0 ≤ k ≤ 0,5
* 0 ≤ l ≤ 0,5
où TR est une terre rare (choisie de préférence parmi Gd, Dy ou Ho, ou un mélange de terres rares.

Un procédé de fabrication du ferrite selon l'invention peut être le suivant.

Dans une première étape, on pèse les matières premières de type oxydes ou carbonates qui sont nécessaires à l'obtention du ferrite grenat visé. Classiquement, on peut utiliser, notamment, Fe₂O₃, Y₂O₃, CuO, Bi₂O₃.

Dans une deuxième étape, les matières premières sont mélangées et broyées, par exemple dans un broyeur à boulets (à savoir un récipient hermétique rempli de boulets en acier inoxydable ou en toute autre matière dure non polluante pour lesdites matières premières). Les matières premières peuvent aussi être mélangées et broyées par attrition, c'est-à-dire dans un dispositif rotatif rempli de billes en contact qui broient la poudre par cisaillement. On obtient ainsi une première poudre. Avantageusement, ce broyage peut être réalisé en milieu humide. Par « milieu humide », on entend un mélange entre la poudre et de l'eau, par exemple à raison de 100 ml d'eau pour 100 g de poudre. Les proportions sont à ajuster en fonction de la finesse initiale de la poudre... La granulométrie de la poudre obtenue est typiquement micronique ou submicronique, de l'ordre de 0,1 µm à quelques µm.

Dans une troisième étape, la première poudre est traitée thermiquement, à une température de 800 à 1100°C, sous air, sous azote ou sous oxygène, en une seule ou plusieurs fois. Cette étape, dite classiquement « chamottage » ou « calcination », a pour but de former complètement ou en partie la phase cristalline recherchée.

Dans une quatrième étape, la poudre chamottée est à nouveau broyée dans des conditions analogues à celles de la deuxième étape, éventuellement, donc, en milieu humide.

Dans une cinquième étape, ladite poudre rebroyée est mélangée à des produits organiques (liants et/ou défloculants et/ou surfactants notamment) pour obtenir une pâte. Cette étape est classique en matière de réalisation de pièces par métallurgie des poudres. Parmi les produits organiques pouvant être utilisés on peut citer non limitativement :
- comme défloculant : de l'huile de menhaden (menhaden fish oil) ou du dibutylamine ;
- comme solvants : un mélange éthanol anhydre + trichloroéthylène ou un mélange éthanol anhydre + méthyléthylcétone ;
- comme plastifiant : un mélange dibutylphtalate + polyéthylène glycol ;
- comme liant : du polyvinylbutyral.

Il doit être entendu que ces produits organiques ont vocation à être décomposés lors des étapes ultérieures et ne se retrouveront pas dans le ferrite final. Il n'y a donc pas de risque qu'ils dégazent dans des conditions d'utilisation du composant sous pression réduite et que le composant final soit impropre aux usages dans le domaine spatial. Cette pâte est un « précurseur » du ferrite, en ce que les étapes ultérieures du traitement, notamment le frittage, aboutiront à la formation du ferrite de l'invention.

Dans une sixième étape, on dépose la pâte en une couche ou plusieurs couches d'épaisseur totale 40 à 200 µm par coulage ou sérigraphie. Puis, de préférence, surtout lorsqu'on a superposé plusieurs couches, on presse cette ou ces couche(s) par pressage axial ou isostatique entre 50 et 80°C avec des pressions de 100 à 200 bar pour favoriser sa densification lors du frittage ultérieur.

Puis, dans une septième étape, on réalise le frittage du ferrite en le portant à haute température, soit généralement entre 850 et 1150°C, de préférence entre 900 et 1000°C selon sa composition, pendant 0,5 à 3 heures. De préférence, ce frittage est effectué sous air ou oxygène. Une atmosphère inerte conduirait à une réduction du ferrite et, donc, augmenterait ses pertes magnétiques et diélectriques. On obtient ainsi la formation complète de la phase cristalline grenat et la densification du ferrite.

Ce mode opératoire est exécuté lorsqu'on veut obtenir le ferrite seul, en tant que tel. Mais un des avantages de l'invention est d'autoriser la fabrication simultanée de composants hyperfréquences ou de parties significatives de tels composants, dans lesquels est inclus ledit ferrite, par un procédé de cofrittage.

A cet effet, après avoir déposé et éventuellement pressé la pâte, on forme une structure multicouche en lui superposant d'autres éléments du composant qui peuvent, non limitativement, être :
- au moins un ferrite dur formant aimant permanent, tel qu'un hexaferrite ;
- et/ou au moins un diélectrique ;
- et/ou au moins une couche d'un métal (or, argent - palladium ou autre).

Ces autres éléments peuvent prendre leur composition définitive lors du frittage lui-même.

Dans ce cas, il faut considérer que la couche correspondante superposée à la pâte précurseur du ferrite selon l'invention, est elle-même un précurseur dudit élément.

Puis on procède au cofrittage de cette structure multicouches, ce qui est possible puisque les températures de frittage des diverses parties de la structure sont du même ordre de grandeur, selon l'un des avantages des ferrites de l'invention. On peut ainsi réaliser la solidarisation du ferrite et d'autres éléments du composant par ce cofrittage lui-même.

Ce frittage a lieu à une température de 850 à 1150°C, de préférence entre 900 et 1000°C, sous air ou sous oxygène pendant une durée de 30 min à 3 h. On obtient ainsi le composant hyperfréquences ou la partie de composant hyperfréquences désiré.

On va, à présent, exposer des résultats expérimentaux obtenus sur des ferrites de référence et des ferrites selon l'invention.

On a synthétisé en laboratoire cinq ferrites A à E en utilisant le procédé précédemment décrit :
- ferrite A (référence) Y₃ Fe₅ O₁₂
- ferrite B (référence) Y_{2,95} Cu_{0,05} Fe₅ O₁₂
- ferrite C (référence) Y_{2,5} Bi_{0,5} Fe₅ O₁₂
- ferrite D (invention) Y_{2,45} Cu_{0,05} Bi_{0,5} Fe₅ O₁₂
- ferrite E (invention) Y_{2,25} Cu_{0,05} Bi_{0,7} Fe₅ O₁₂

Les matières premières sont des oxydes industriels CuO, Y₂O₃, Bi₂O₃ et Fe₂O₃.

Les broyages sont effectués par attrition pendant 30 minutes à la vitesse de 500 tours/min. Les billes de broyage sont en zircone, le bol de broyage est en acier inoxydable.

Le chamottage est réalisé à 1200°C pour le ferrite A sans cuivre et sans bismuth (YIG conventionnel), à 1050°C pour le ferrite B contenant du cuivre (sans bismuth), à 950°C pour le ferrite C contenant du bismuth (sans cuivre), 950°C pour le ferrite D contenant conjointement du cuivre et du bismuth et 900°C pour le ferrite E contenant conjointement du cuivre et du bismuth avec une quantité de bismuth supérieure à celle du ferrite D. Les ferrites D et E relèvent de la variante de l'invention où le fer n'a pas été substitué par Cu et/ou Bi, mais seulement l'yttrium.

Les températures de chamottage ont été optimisées à l'aide de l'analyse par diffraction aux Rayons X des poudres obtenues, qui renseigne sur les phases cristallographiques formées.

Compte tenu des réactivités différentes des ferrites A à E, la température de frittage a été ajustée pour chaque composition de manière à obtenir des densités optimales, c'est-à-dire les plus élevées possibles.

Le frittage est réalisé à 1070 ou 1000°C sous oxygène pour les formulations avec cuivre et bismuth, et à 1480°C pour le ferrite grenat sans Cu et Bi, soit un écart de 480°C.

Les masses volumiques mesurées après frittage sont données dans le tableau 1.

**Tableau 1 : Masses volumiques après frittage**

| Ferrite | Frittage à 1000°C | Frittage à 1070°C | Frittage à 1480°C |
|---|---|---|---|
| A (ref) | Pas frittable | Pas frittable | 5,04 g/cm³ |
| B (ref) | Pas frittable | 5,05 g/cm³ | - |
| C (ref) | 3,75g/cm³ | 4,90 g/cm³ | - |
| D (inv) | 5,25 g/cm³ | - | - |
| E (inv) | 5,45 g/cm³ | - | - |

On obtient des masses volumiques supérieures à celles du ferrite A avec les ferrites contenant simultanément du cuivre et du bismuth, malgré des températures de frittage très inférieures.

Le ferrite B ne contenant pas de Bi n'est pas frittable à 1000°C, et le ferrite C ne contenant pas de Cu ne permet pas d'obtenir une densité comparable à celle du ferrite A (YIG conventionnel).

Cette densité élevée procure les avantages suivants : l'obtention d'un faible ΔH, de faibles pertes diélectriques et d'une perméabilité plus élevée. Cela permet de réduire la taille du composant.

Les moments magnétiques à saturation par gramme sont donnés dans le tableau 2.

**Tableau 2 : Moments magnétiques à saturation par gramme.**

| Ferrite | Frittage à 1000°C | Frittage à 1070°C | Frittage à 1480°C |
|---|---|---|---|
| A (ref) | - | - | 28,7 uem/g |
| B (ref) | - | 27,5 uem/g | - |
| C (ref) | 25,3 uem/g | 25,5 uem/g | - |
| D (inv) | 25,5 uem/g | - | - |
| E (inv) | 25,9 uem/g | - | - |

| | | | |
|---|---|---|---|
| (uem/g étant l'unité électromagnétique par gramme correspondant à 1 Am²/kg en unités SI) | | | |

Ces valeurs conduisent aux aimantations à saturation en Tesla figurant dans le tableau 3.

**Tableau 3 : Aimantation à saturation.**

| Ferrite | Frittage à 1000°C | Frittage à 1070°C | Frittage à 1480°C |
|---|---|---|---|
| A (ref) | - | | 0,18 T |
| B (ref) | - | 0,17 T | - |
| C (ref) | 0,12 T | 0,16 T | - |
| D (inv) | 0,17 T | - | - |
| E (inv) | 0,18 T | - | - |

Le ferrite E selon l'invention contenant à la fois Bi et Cu avec la quantité de Bi la plus élevée a une aimantation à saturation identique à celle du ferrite YIG A conventionnel. Le ferrite D selon l'invention contenant moins de Bi et autant de Cu que E a une aimantation à saturation de peu inférieure. Les ferrites B et C de référence ne contenant qu'un seul des éléments Cu et Bi respectivement ne s'approchent de ces résultats qu'au prix d'un frittage effectué à une température plus élevée que celui de D et E.

Les pertes magnétiques à bas niveau de puissance (moins de 100 mW, typiquement quelques mW) des différents ferrites figurent dans le tableau 4.

Dans les dispositifs hyperfréquences comme les circulateurs ou les isolateurs, les pertes magnétiques sont données par la largeur de raie effective de la résonance gyromagnétique à 10 GHz (ΔH_{eff}). Pour les échantillons réalisés, elles valent respectivement.

**Tableau 4 : Pertes magnétiques (1 A/m correspond à 4π/10³ Oe)**

| Ferrite | Frittage à 1000°C | Frittage à 1070°C | Frittage à 1480°C |
|---|---|---|---|
| A (ref) | - | - | ΔH_{eff} = 8 ± 2 Oe |
| B (ref) | - | ΔH_{eff} = 11 ± 2 Oe | - |
| C (ref) | ΔH_{eff} = 25 Oe ± 2 Oe | ΔH_{eff} = 20 Oe + 2 Oe | - |
| D (inv) | ΔH_{eff} = 9 Oe + 2 Oe | - | - |
| E (inv) | ΔH_{eff} = 10 Oe ± 2 Oe | - | - |

Les pertes magnétiques loin de la résonance sont plus faibles pour les ferrites D et E selon l'invention contenant conjointement du cuivre et du bismuth que pour le ferrite C ne contenant que du bismuth. Elles sont compatibles avec les applications hyperfréquences envisagées comme par exemple les circulateurs ou les isolateurs hyperfréquences, et s'approchent des résultats obtenus avec le ferrite A de référence.

Les seuils de non-linéarité ΔHₖ à fort niveau de puissance (quelques W à quelques dizaines de W) ont été comparés entre les ferrites A, B, C, D et E et figurent dans le tableau 5.

Lorsque la puissance hyperfréquence devient importante, typiquement supérieure à 10 W pour un circulateur ou un isolateur fonctionnant à 10 GHz, les seuils de non-linéarité sont donnés par la largeur de raie d'ondes de spins à 10 GHz (ΔHₖ).

**Tableau 5 : Seuils de non-linéarité à fort niveau de puissance. (1 A/m correspond à 4π/10³ Oe)**

| Ferrite | Frittage à 1000°C | Frittage à 1070°C | Frittage à 1480°C |
|---|---|---|---|
| A (ref) | - | - | ΔHₖ = 1 ± 0,5 Oe |
| B (ref) | - | ΔHₖ = 2 ± 0,5 Oe | - |
| C (ref) | non mesurable | ΔHₖ = 1,3 ± 0,5 Oe | - |
| D (inv) | ΔHₖ = 13,6 ± 0,5 Oe | - | - |
| E (inv) | 3 ± 0,5 Oe | - | - |

Plus ΔHₖ est élevé, meilleure est la tenue en puissance. On constate que le ferrite grenat E qui contient simultanément du cuivre et du bismuth a une meilleure tenue en puissance que le ferrite YIG A et que le ferrite D est particulièrement bon.

On a également comparé les pertes diélectriques des différents ferrites à haute fréquence (10 GHz), exprimées par la grandeur tanδ_{ε}. Elles figurent dans le tableau 6.

**Tableau 6 : Pertes diélectriques à haute fréquence.**

| Ferrite | Frittage à 1000°C | Frittage à 1070°C | Frittage à 1480°C |
|---|---|---|---|
| A (ref) | - | - | tanδ_{ε} = 2.10⁻⁴ |
| B (ref) | - | tanδ_{ε} = 5,5.10⁻⁴ | - |
| C (ref) | non mesurable | tanδ_{ε} = 5.10⁻⁴ | - |
| D (inv) | tanδ_{ε} = 8.10⁻⁴ | - | - |
| E (inv) | tanδ_{ε} = 2,5.10⁻³ | - | - |

On constate que les pertes diélectriques tendent à augmenter avec la portion de Bi : le ferrite D se comporte en particulier moins bien que les ferrites A et B et mieux que le ferrite E.

Cependant, le niveau de pertes observé sur le ferrite E, a fortiori sur le ferrite D, reste compatible avec les applications hyperfréquences envisagées pour les ferrites selon l'invention, notamment les circulateurs et isolateurs hyperfréquences.

Tous ces résultats montrent que les ferrites selon l'invention, où Y et/ou Fe sont partiellement substitués par Bi et Cu présents simultanément, présentent des propriétés magnétiques qui les rendent substituables de façon avantageuse ou au moins très acceptable aux ferrites YIG classiques. En fonction de l'application envisagée, on pourra privilégier des variantes de l'invention qui ont des teneurs en Bi plus ou moins élevées, et on pourra ajouter d'autres éléments de substitution (Al, In, Ca, Zr, V, Co, Si, terres rares Dy, Gd, Ho) qui permettront d'affiner l'adaptation du ferrite à l'application envisagée.

Dans tous les cas, ces ferrites selon l'invention présentent l'avantage d'être frittables à de relativement basses températures, ce qui rend possible la réalisation de leur frittage simultanément à l'assemblage de tout ou partie des composants dans lesquels ils sont intégrés, par un procédé de cofrittage.

On a synthétisé en laboratoire une autre série de quatre ferrites (1 à 4) conformes à l'invention en utilisant le procédé précédemment décrit :
- ferrite 1 Y_{2,457}Cu_{0,05}Bi_{0,51}Fe₅O₁₂
- ferrite 2 (invention) Y_{2,297}Cu_{0,05}Bi_{0,67}Fe₅O₁₂
- ferrite 3 (invention) Y_{2,137}Cu_{0,05}Bi_{0,83}Fe₅O₁₂
- ferrite 4 (invention) Y_{1,977}Cu_{0,05}Bi_{0,99}Fe₅O₁₂

On remarque que la quantité de bismuth augmente du ferrite 1 au ferrite 4.

Pour un frittage à 950°C pendant 2 heures sous oxygène, on a mesuré les aimantations et les masses volumiques ci-après :

**Tableau 7 : moments magnétiques à saturation et masses volumiques des ferrites 1 à 4 frittées à 950°C (1 uem/g correspond à 1 Am²/kg)**

| | Moment magnétique à Saturation par gramme | Masse volumique |
|---|---|---|
| Ferrite 1 | 28,00 uem/g | 5,33 g/cm³ |
| Ferrite 2 | 27,30 uem/g | 5,49 g/cm³ |
| Ferrite 3 | 25,10 uem/g | 5,54 g/cm³ |
| Ferrite 4 | 24,40 uem/g | 5,78 g/cm³ |

Pour un frittage à 900°C pendant 2 heures sous oxygène, on a mesuré les aimantations et les masses volumiques ci-après :

**Tableau 8 : moments magnétiques à saturation et masses volumiques des ferrites 1 à 4 frittées à 900°C (1 uem/g correspond à 1 Am²/kg)**

| | Moment magnétique à Saturation par gramme | Masse volumique |
|---|---|---|
| Ferrite 1 | 24,60 uem/g | 3,81 g/cm³ |
| Ferrite 2 | 26,60 uem/g | 5,21 g/cm³ |
| Ferrite 3 | 26,10 uem/g | 5,15 g/cm³ |
| Ferrite 4 | 22,30 uem/g | 5,60 g/cm³ |

On constate que le ferrite 1 qui contient le moins de Bi ne densifie pratiquement pas à 900°C et donc que le cofrittage avec l'argent est inenvisageable. De ce point de vue, il est préférable de choisir les teneurs en Bi les plus élevées, de l'ordre de 0,65 à 1.

Les formulations présentant un taux de bismuth compris entre 0,5 et 1, de préférence 0,65 à 1, présentent donc le meilleur compromis entre bonnes performances électromagnétiques et basse température de frittage.

## Revendications

1. Procédé de fabrication d'un composant hyperfréquences comportant plusieurs éléments dont un ferrite grenat d'Yttrium-Fer, **caractérisé en ce qu'**on prépare ledit ferrite par un procédé comportant la succession d'étapes suivantes :
- on pèse les matières premières renfermant les composants du ferrite dans des proportions telles que le ferrite final obtenu à la composition suivante :
Yₐ TR_{b} Bi_{c} Fe_{d} Alₑ In_{f} Ca_{g} Cuₕ Zrᵢ Vⱼ Coₖ Siₗ O_{12 ± γ}
avec :
* -1 ≤ γ ≤ 1
* 3(a+b+c+d+e+f) + 2(g+h+k) + 4(i+l) +5j = 24 ± 2γ
* 1 ≤ a ≤ 3,5
* 0 ≤ b ≤ 1,5
* 0,1 ≤ c ≤ 1, de préférence 0,65 ≤ c ≤ 1
* 4 ≤ d ≤ 5
* 0 ≤ e ≤ 1,5
* 0 ≤ f ≤ 0,8
* 0 ≤ g ≤ 1
* 0,01 ≤ h ≤ 0,05
* 0 ≤ i ≤ 0,2
* 0 ≤ j ≤ 0,8
* 0 ≤ k ≤ 0,5
* 0 ≤ l ≤ 0,5
où TR est une terre rare choisie de préférence parmi Gd, Dy ou Ho, ou un mélange de terres rares,
- on mélange et broie lesdites matières premières lors d'un premier broyage pour obtenir une première poudre ;
- on réalise un chamottage de ladite première poudre à 800-1100°C sous air, azote ou oxygène ;
- on réalise un broyage de la poudre chamottée lors d'un deuxième broyage pour obtenir une deuxième poudre ;
- on mélange à ladite deuxième poudre des produits organiques tels que des liants et/ou des défloculants et/ou des surfactants) pour obtenir une pâte ;
- on dépose ladite pâte sous forme d'une couche ou d'une superposition de couches ;
- on réalise de préférence un pressage de ladite couche ou superposition de couches à une pression de 100 à 200 bar ;
- on réalise le frittage de ladite couche ou superposition de couches pressée pour obtenir le ferrite, ce frittage ayant lieu entre 850 et 1150°C, de préférence entre 900 et 1000°C pendant 30 min à 3 h et, lors de ce frittage, on solidarise ledit ferrite à au moins un desdits autres éléments dudit composant ou à un précurseur dudit élément par un procédé de cofrittage,
et **en ce que** l'un au moins desdits éléments autres que le ferrite est un aimant permanent, tel qu'un hexaferrite ou un alliage Sm-Co ou un alliage Nd - Fe - B.

2. Procédé selon la revendication 1, **caractérisé en ce que** le premier et/ou le deuxième broyage a lieu en milieu humide.

3. Procédé selon l'une des revendications 1 ou 2, **caractérisé en ce que** le frittage est effectué sous air ou oxygène.

4. Procédé selon l'une quelconque des revendications précédentes, **caractérisé en ce que** l'un au moins desdits éléments autres que le ferrite et autre que l'aimant permanent est un diélectrique.

5. Procédé selon l'une quelconque des revendications précédentes, **caractérisé en ce que** l'un au moins desdits éléments autres que le ferrite et autre que l'aimant permanent est une couche d'un métal, tel que l'or ou un alliage argent-palladium.

6. Composant hyperfréquences, **caractérisé en ce qu'**il est conçu par un procédé selon l'une quelconque des revendications 1 à 5.

7. Composant hyperfréquences selon la revendication 6, **caractérisé en ce qu'**il s'agit d'un filtre.

8. Composant hyperfréquences selon la revendication 6, **caractérisé en ce qu'**il s'agit d'un déphaseur.

9. Composant hyperfréquences selon la revendication 6, **caractérisé en ce qu'**il s'agit d'un circulateur.

10. Composant hyperfréquences selon la revendication 6, **caractérisé en ce qu'**il s'agit d'un isolateur.

## Patentansprüche

1. Verfahren zum Herstellen eines Mikrowellenbauteils aufweisend mehrere Elemente, darunter ein Yttrium-Eisen-Granatferrit, dadurch charakterisiert, dass man das Ferrit durch ein Verfahren durch ein Verfahren bereitstellt, das die Abfolge der folgenden Schritte aufweist:
- Man wiegt die Rohmaterialien, die die Komponenten des Ferrits enthalten, in solchen Anteilen, dass das erhaltene finale Ferrit die folgende Zusammensetzung hat:
Yₐ TR_{b} Bi_{c} Fe_{d} Alₑ In_{f} Ca_{g} Cuₕ Zrᵢ Vⱼ Coₖ Si 0₁₂ ± γ
mit
* -1 ≤ γ ≤ 1
* 3(a+b+c+d+e+f) + 2(g+h+k) + 4 (i+l) + 5j =24 ± 2 γ
* 1 ≤ a ≤ 3,5
* 0 ≤ b ≤ 1,5
* 0,1 ≤ c ≤ 1, bevorzugt 0,65 ≤ c ≤ 1
* 4 ≤ d ≤ 5
* 0 ≤ e ≤ 1,5
* 0 ≤ f ≤ 0,8
* 0 ≤ g ≤ 1
* 0,01 ≤ h ≤ 0,05
* 0 ≤ i ≤ 0,2
* 0 ≤ j ≤ 0,8
* 0 ≤ k ≤ 0,5
* 0 ≤ l ≤ 0,5
wobei TR eine seltene Erde, vorzugsweise ausgewählt aus Gd, Dy oder Ho, oder einer Mischung aus seltenen Erden ist,
- man mischt und mahlt die Rohmaterialien während eines ersten Mahlens, um ein erstes Pulver zu erhalten;
- man realisiert eine Kalzination des ersten Pulvers bei 800-1100°C unter Luft, Stickstoff oder Sauerstoff;
- man realisiert ein Mahlen des kalzinierten Pulvers während eines zweiten Mahlens, um ein zweites Pulver zu erhalten;
- man mischt mit dem zweiten Pulver organische Produkte wie Bindemittel und/oder Entflockungsmittel und/oder Tenside, um eine Paste zu erhalten;
- man bringt die Paste in Form einer Schicht oder einer Überlagerung von Schichten auf;
- man realisiert vorzugsweise ein Pressen der Schicht oder der Überlagerung von Schichten bei einem Druck von 100 bis 200 bar;
- man realisiert das Sintern der gepressten Schicht oder Überlagerung von gepressten Schichten, um das Ferrit zu erhalten, wobei das Sintern zwischen 850 und 1150°C, vorzugsweise zwischen 900 und 1000°C, für 30 Minuten bis 3 Stunden stattfindet und, beim Sintern, verbindet man das Ferrit durch einen Co-Sinterprozess an mindestens einem der anderen Elemente des Bauteils oder an einem Vorläufer des Elements,
und dadurch, dass mindestens eines der Elemente außer dem Ferrit ein Permanentmagnet, wie ein Hexaferrit oder eine Sm-Co-Legierung oder eine Nd-Fe-B-Legierung ist.

2. Verfahren nach Anspruch 1, **dadurch gekennzeichnet, dass** das erste und / oder zweite Mahlen in einem feuchten Medium erfolgt.

3. Verfahren nach einem der Ansprüche 1 oder 2, **dadurch gekennzeichnet, dass** das Sintern unter Luft oder Sauerstoff durchgeführt wird.

4. Verfahren nach einem der vorhergehenden Ansprüche, **dadurch gekennzeichnet, dass** mindestens eines der Elemente außer dem Ferrit und außer dem Permanentmagneten ein Dielektrikum ist.

5. Verfahren nach einem der vorhergehenden Ansprüche, **dadurch gekennzeichnet, dass** mindestens eines der Elemente außer dem Ferrit und außer dem Permanentmagneten eine Schicht aus einem Metall wie Gold oder einer Silber-Palladium-Legierung ist.

6. Mikrowellenkomponente, **dadurch gekennzeichnet, dass** sie durch ein Verfahren gemäß einem der Ansprüche 1 bis 5 erhalten wird.

7. Mikrowellenkomponente nach Anspruch 6, **dadurch gekennzeichnet, dass** es sich um einen Filter handelt.

8. Mikrowellenkomponente nach Anspruch 6, **dadurch gekennzeichnet, dass** es sich um einen Phasenschieber handelt.

9. Mikrowellenkomponente nach Anspruch 6, **dadurch gekennzeichnet, dass** es sich um einen Zirkulator handelt.

10. Mikrowellenkomponente nach Anspruch 10, **dadurch gekennzeichnet, dass** es sich um einen Isolator handelt.

## Claims

1. Method for producing a hyperfrequency component comprising a plurality of elements including an yttrium iron garnet ferrite, **characterised in that** said ferrite is prepared by a method comprising the following steps in succession:
- the raw materials containing the components of the ferrite are weighed in proportions such that the final ferrite obtained has the following composition:
Yₐ TR_{b} Bi_{c} Fe_{d} Alₑ In_{f} Ca_{g} Cuₕ Zrᵢ Vⱼ Coₖ Siₗ O_{12 ± γ}
where:
* -1 ≤ γ ≤ 1
* 3(a+b+c+d+e+f) + 2(g+h+k) + 4(i+l) + 5j = 24 ± 2γ
* 1 ≤ a ≤ 3.5
* 0 ≤ b ≤ 1.5
* 0.1 ≤ c ≤ 1, preferably 0.65 ≤ c ≤ 1
* 4 ≤ d ≤ 5
* 0 ≤ e ≤ 1.5
* 0 ≤ f ≤ 0.8
* 0 ≤ g ≤ 1
* 0.01 ≤ h ≤ 0.05
*0 ≤ i ≤ 0.2
* 0 ≤ j ≤ 0.8
* 0 ≤ k ≤ 0.5
* 0 ≤ l ≤ 0.5
where TR is a rare earth chosen preferably from Gd, Dy or Ho, or a mixture of rare earths;
- said raw materials are mixed and ground in a first grinding operation to obtain a first powder;
- said first powder is calcined at from 800 to 1100°C in air, nitrogen or oxygen;
- the calcined powder is ground in a second grinding operation to obtain a second powder;
- organic products such as binders and/or deflocculating agents and/or surfactants are mixed with said second powder to obtain a paste;
- said paste is deposited in the form of a layer or of a superposition of layers;
- said layer or superposition of layers is preferably pressed at a pressure of from 100 to 200 bar;
- said pressed layer or superposition of layers is sintered to obtain the ferrite, sintering taking place between 850 and 1150°C, preferably between 900 and 1000°C, for from 30 minutes to 3 hours and, during sintering, said ferrite is attached to at least one of said other elements of said component or to a precursor of said element by a co-sintering method,
and **in that** at least one of said elements other than the ferrite is a permanent magnet, such as a hexaferrite or a Sm-Co alloy or a Nd-Fe-B alloy.

2. Method according to claim 1, **characterised in that** the first and/or the second grinding operation takes place in a wet medium.

3. Method according to either claim 1 or claim 2, **characterised in that** the sintering is carried out in air or oxygen.

4. Method according to any one of the preceding claims, **characterised in that** at least one of said elements other than the ferrite and other than the permanent magnet is a dielectric.

5. Method according to any one of the preceding claims, **characterised in that** at least one of said elements other than the ferrite and other than the permanent magnet is a layer of a metal, such as gold or a silver-palladium alloy.

6. Hyperfrequency component, **characterised in that** it is designed by a method according to any one of claims 1 to 5.

7. Hyperfrequency component according to claim 6, **characterised in that** it is a filter.

8. Hyperfrequency component according to claim 6, **characterised in that** it is a phase shifter.

9. Hyperfrequency component according to claim 6, **characterised in that** it is a circulator.

10. Hyperfrequency component according to claim 6, **characterised in that** it is an insulator.
